# EUROPEAN PATENT SPECIFICATION

(11) **EP 2 479 960 B1**
(45) Date of publication and mention of the grant of the patent: **10.12.2014**
(21) Application number: 11151757.9
(22) Date of filing: 21.01.2011
(51) Int. Cl.: H04M 1/02, E05D 11/06

(54) **Resilient swivel coupling mechanism**
Elastischer Drehkupplungsmechanismus
Mécanisme de couplage résilient de rotule

(43) Date of publication of application: 25.07.2012
(73) Proprietor: BlackBerry Limited, Waterloo, ON N2K 0A7 (CA)
(72) Inventor: Holmann IV, Martin, Sunrise, FL 33323 (US); Ivanik, Bruce, Sunrise, FL 33323 (US); Moskowitz, Douglas, Sunrise, FL 33323 (US)
(74) Representative: Roberts, Gwilym Vaughan

(56) References cited:
- EP-A1- 1 615 406
- US-A- 5 485 517

## Description

### FIELD OF THE DISCLOSURE

The present disclosure generally relates to mechanical rotatable coupling mechanisms (or bushings) for portable electronic devices, and more particularly to a swivel mechanism for use within a portable electronic device, according to the claims.

### BACKGROUND

Many portable electronic devices now comprise displays that can be rotated with respect to the keyboard or vice versa. For example, these devices usually allow the display to be rotated 90 degrees with respect to the keyboard. This extended configuration exposes the device and the extended portion, in particular, to increased damage as a result of an impact force such as those experienced by dropping the device, bumping the device, etc. The coupling mechanisms implemented on the device for allowing these extended configurations generally do not provide any type of protection from these impact forces.

US 5485517 discloses a portable wireless telephone having swivel chassis.

EP1615406 discloses a locking apparatus of swing hinge module for mobile communication terminals.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:
FIG. 1 is an exploded view of a coupling mechanism assembly comprising a resilient coupling mechanism according to one example;
FIG. 2 is a cross-sectional view of the coupling mechanism assembly comprising the resilient coupling mechanism of FIG. 1 according to one example;
FIG. 3 is a front perspective view of a portable electronic device comprising a first portion in an extended position with respect to a second portion according to one example;
FIGs. 4-6 are top perspective and cross-sectional views of the coupling mechanism assembly of FIG. 1 showing a coupling sequence of the resilient coupling mechanism as a portable electronic device rotatably transitions from a non-extended position to an extended position according to one example; and
FIG. 7 is a cross-sectional view of the coupling mechanism assembly of FIG. 1 showing the mechanism of FIG. 1 showing the resilient coupling mechanism being coupled to a portion of a portable electronic device when the device is in an extended position according to one example.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having" as used herein, are defined as comprising (i.e. open language). The term "coupled" as used herein, is defined as "connected" although not necessarily directly, and not necessarily mechanically.

The term "wireless communication device" is intended to broadly cover many different types of devices that can wirelessly receive signals, and in most cases can wirelessly transmit signals, and may also operate in a wireless communication system. For example, and not for any limitation, a wireless communication device can include any one or a combination of the following: a two-way radio, a cellular telephone, a mobile phone, a smartphone, a two-way pager, a wireless messaging device, a laptop/computer, a personal digital assistant, and other similar devices.

Various materials or combinations of materials can be used to construct the rotatable coupling mechanism (or bushing) and its components. For example, materials such as plastics (e.g., polyoxymethylene), metals, metal alloys, composites, ceramics, and other inorganic or organic materials or combinations thereof may be used.

Aspects of the invention are defined in the appended independent claims.

Described below is a resilient coupling mechanism assembly that comprises a resilient coupling mechanism. The resilient coupling mechanism comprises a resilient member that may be substantially circular. The resilient member may comprise at least an inner portion that is coupled to an outer portion. The outer portion may circumscribe the inner portion. A first member may comprise a first portion and a second portion. The second portion may extend from a top surface of the first portion. The first portion may comprise a diameter that is larger than a diameter of the second portion. A bottom surface of the first portion may be coupled to a top surface of the inner portion of the resilient member. The first member comprises a cavity which may extend from a top surface of the second portion to at least a top surface of the first portion. The first member further comprises a vertical member disposed within the cavity. A second member is coupled to the first member. The second member may comprise a first portion and a second portion. The first and second portions may be substantially circular. The first portion may comprise a diameter that is larger than a diameter of the second portion. The second portion may extend from a bottom surface of the first portion. The second member comprises a cavity that receives the vertical member of the first member.

The resilient coupling mechanism provides an additional coupling point for at least a first portion of a device. This additional coupling point provides additional support and rigidity to the device. For example, when this first portion of the device is in an extended position, the moment of a force experienced by the first portion when the device is dropped, bumped, etc. is decreased by the resilient coupling mechanism. Therefore, less stress and force are exerted on the components of the device.

### Resilient Coupling Mechanism

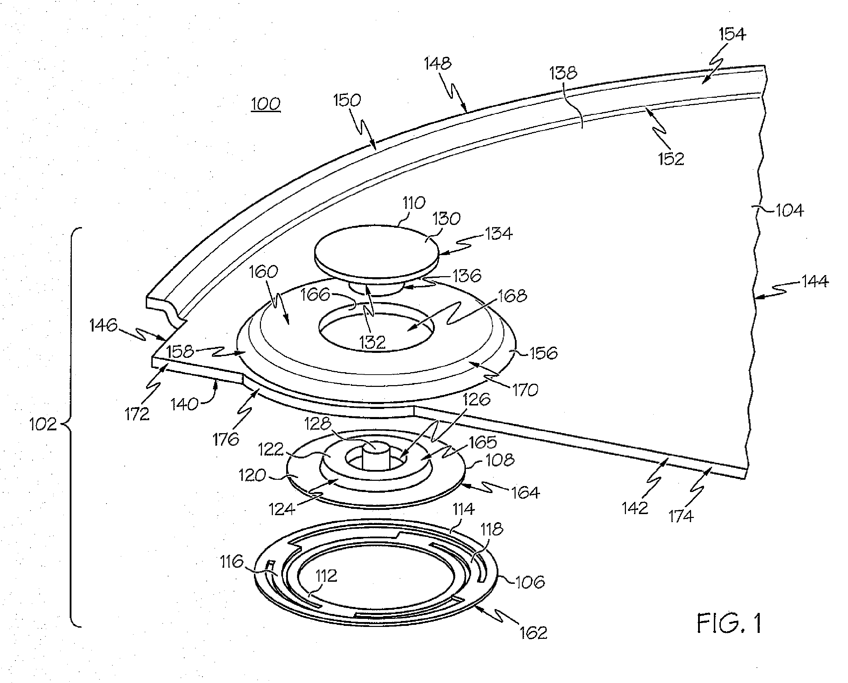

FIG. 1 is an exploded view of a resilient coupling mechanism assembly 100 according to one example. The resilient coupling mechanism assembly 100 comprises a resilient coupling mechanism 102 and a base plate 104. The resilient coupling mechanism 102 comprises a resilient member (or clamp spring) 106, a first member (or clamp screw) 108, and a second member (or clamp nut) 110. The resilient member (or clamp spring) 106, in one example, is substantially circular and can be any resilient object that stores mechanical energy when compressed such as, but not limited to, a spring. In this example, the resilient member (or clamp spring) 106 comprises an inner portion (or inner ring) 112 and an outer portion (or outer ring) 114 that circumscribes the inner portion (or inner ring) 112. Stated differently, the outer portion (or outer ring) 114 comprises a larger diameter than the inner portion (or inner ring) 112. One or more intermediate openings 116, 118 that are disposed between the inner portion (or inner ring) 112 and the outer portion (or outer ring) 114 form a passage therebetween. Also, the inner portion (or inner ring) 112 and the outer portion (or outer ring) 114 of the resilient member (or clamp spring) 106 are able to move independent of each other. It should be noted that other configurations of the resilient member (or clamp spring) 106 are also applicable as well.

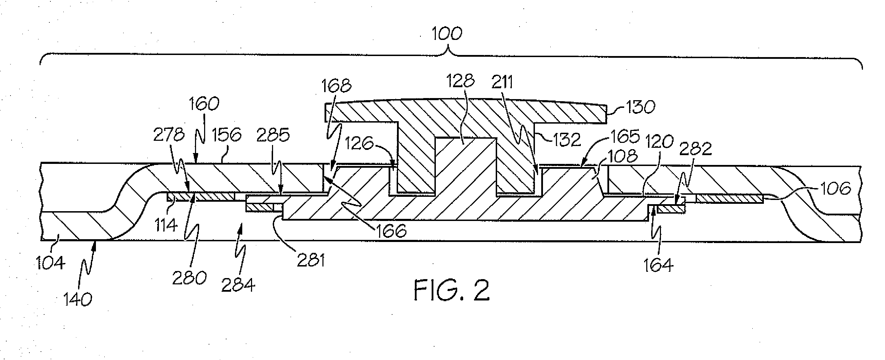

The first member (or clamp screw) 108 is also substantially circular and forms a base for the second member (or clamp nut) 110. The first member (or clamp screw) 108 comprises a first (lower) portion/region 120 and a second (upper) portion/region 122 that are coupled to each other via a chamfered region 124. The first and second portions 120, 122 are substantially circular. The first portion/region 120 comprises a diameter that is larger than the diameter of the second portion/region 122. The second portion/region 122 is elevated with respect to the first portion/region 120 via the chamfered region 124. The first member (or clamp screw) 108 also defines a cavity 126 that extends at least through a top surface 165 of the second portion/region 122 to at least a top surface 285 (FIG. 2) of the first portion/region 120. The cavity 126 circumscribes a vertical member 128 that is disposed within the cavity 126 and extends above the second portion/region 122 of the first member (or clamp screw) 108. However, the vertical member 128 is not required to extend above the second portion/region 122. In one embodiment, the vertical member 128 is configured to receive the second member (or clamp nut) 110. In this example, the vertical member 128 is substantially cylindrical, but other configurations are applicable as well.

The second member (or clamp nut) 110 comprises a first portion/region 130 that is substantially circular and a second portion/region 132 that is substantially cylindrical. The second portion/region 132 extends in a vertical direction from a bottom surface 134 of the first portion/region 130. In this example, the first portion/region 130 comprises a diameter that is larger than a diameter of the second portion/region 132. The second portion/region 132 defines a cavity 136 that is configured to receive the vertical member 128 of the first member (or clamp screw) 108.

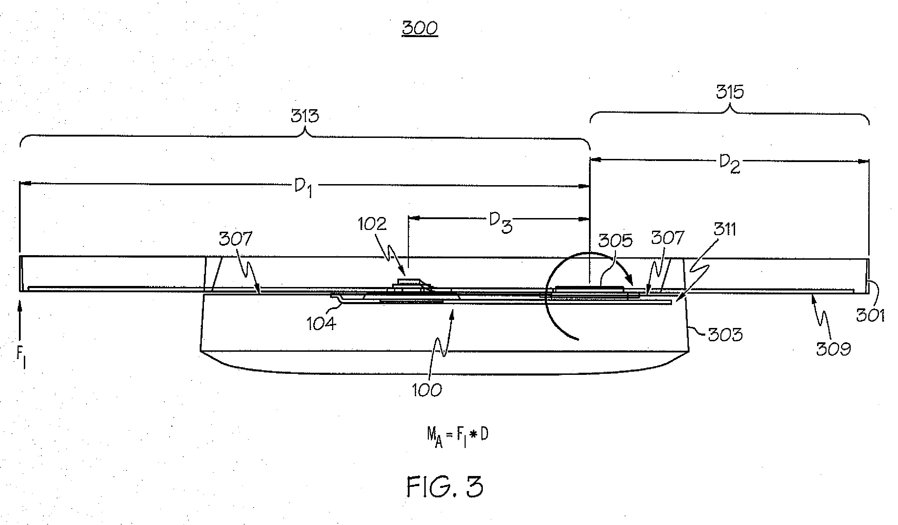

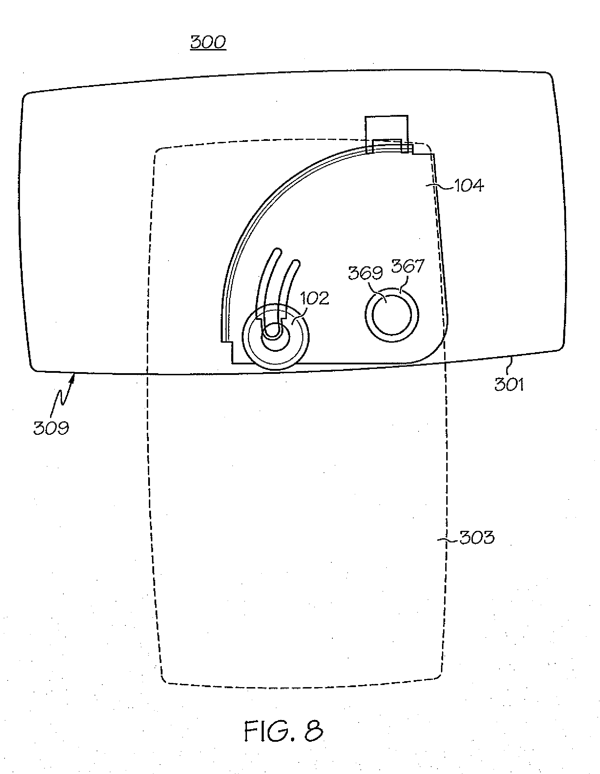

The base plate 104 comprises a rotatable coupling mechanism (or bushing) 345 (See FIG. 3 and FIG. 8) that allows a first portion 301, such as a display, of a portable electronic device 300 to be rotated with respect to a second portion, 303, such as a keyboard, of the device 300. For example, as can be seen in FIG. 8 a first portion 367 of the rotatable coupling mechanism (or bushing) 305 is coupled to the base plate 104 and a second portion 369 of the rotatable coupling mechanism (or bushing) 305 is coupled to a back portion (or bottom surface) 309 of the first portion 301 of the device 300. In this example, the first portion 367 is fixed to the base plate 104 while the second portion 369 is able to rotate about the first portion, thereby allowing the first portion 301 of the device 300 to rotate about the second portion 303 of the device 300.

The base plate 104 also comprises a top portion 138 and a bottom portion 140. The base plate 104 also comprises a first side 142, a second side 144, and a third side 146 that is disposed between the first and second side 144. The third side 146 comprises an arced configuration that defines the degree of movement of the first portion 301 of the device 300 with respect to the second portion 303 of the device 300. At least one region of the third side 146 comprises a protruding portion (or guide rail) 148 that extends beyond the third side 146. The protruding portion (or guide rail) 148 comprises an upper portion 150 that is coupled to a lower portion 152 via a chamfered region 154. The upper portion 150 is elevated with respect to the lower portion 152 and the top portion of the base plate 104. The upper portion 150 also extends farther from the third side 146 than the lower portion 152. The lower portion 150, in the example of FIG. 1, comprises a concave configuration. This configuration of the protruding portion (or guide rail) 148 discussed above allows an area of the first portion 301 of the portable electronic device 300 to rest on the protruding portion (or guide rail) 148 and act as a track for this area to slide along. Stated differently, the protruding portion (or guide rail) 148 acts as a transitioning guide for the first portion 301 of the portable electronic device 300.

The base plate 104 also comprises an embossed region 156 that extends from the surface of the bottom portion 140 to above the surface of the top portion 138. For example, FIG. 1 shows that the embossed region 156 comprises a side portion 158 that extends above the surface of the top portion 138. The embossed region 156 comprises a top portion 160 that meets the side portion 158 and that is elevated above the surface of the top portion 138 of the base plate 104. The embossed region 156, in this example, is substantially circular and is dimensioned to receive the resilient coupling mechanism 102 therein. For example, the embossed region 156 has a diameter that is larger than a diameter of the resilient member (or clamp spring) 106 and a height that is greater than a height of the resilient coupling mechanism 102. This configuration allows the resilient coupling mechanism 102 to reside within the embossed region 156 such that a bottom surface 162 of the resilient member (or clamp spring) 106 and a bottom surface 164 of the first (lower) portion 120 of the first member (or clamp screw) 108 are above, or at least flush, with the bottom portion 140 of the base plate 104.

The top portion 160 of the embossed region 156 comprises an inner wall 166 that circumscribes a first cavity 168. The first cavity 168 comprises a diameter that is smaller than a diameter of the resilient member (or clamp spring) 106 and the first member (or clamp screw) 108 of the resilient coupling mechanism 102, but that is larger than a diameter of the first portion/region 130 and second portion/region 132 of the second member (or clamp nut) 110 of the mechanism 102. This allows a the first portion/region 130 of the second member (or clamp nut) 110 and the second portion/region 132 of the second member (or clamp nut) 110 to pass through the cavity 168 and be elevated above the embossed region 156, as shown in FIG. 2.

In the example of FIG. 1, the embossed region 156 is disposed substantially near the location where the first side 142 and the third side 146 of the base plate 104 meet. Also, in this example, an outer portion 170 of the embossed region 156 extends beyond a first region 172 and a second region 174 of the first side 142. Therefore, the first side 142 comprises an arced region 176 between the first region 172 and the second region 174 that circumscribes the outer portion 170 of the embossed region 156.

Turning now to FIG. 2, FIG. 2 shows a cross-sectional view of the resilient coupling mechanism 102 and the base plate 104. As can be seen in FIG. 2, the vertical member 128 of the first member (or clamp screw) 108 is disposed within the second portion/region 132 of the second member (or clamp nut) 110 and a portion 211 (e.g., a lower region) of the second member (or clamp nut) is disposed within the cavity 126 of the first member (or clamp screw) 108. In this example, the second member (or clamp nut) 110 is removably coupled to the vertical member 128. For example, each of the vertical member 128 and the second member (or clamp nut) 110 can comprise threaded regions that couple the second member (or clamp nut) 110 to the vertical member 128. However, other coupling mechanisms can be used as well. Also, the second member (or clamp nut) 110 is not required to be removably coupled to the vertical member 128.

FIG. 2 also shows that a top surface 278 of at least the outer portion (or outer ring) 114 of the resilient member (or clamp spring) 106 is mechanically coupled to a bottom surface 280 of the top portion 160 of the embossed region 156 of the base plate 104. The bottom surface 164 of the first (lower) portion/region 120 of the first member (or clamp screw) 108 is mechanically coupled to a top surface 282 of the inner portion (or inner ring) 112 of the resilient member (or clamp spring) 106. It should be noted that the first (lower) portion/region 120 of the first member (or clamp screw) 108 can comprise an extending portion 281 that extends from the bottom surface 164 of the first (lower) portion/region 120 that comprises a smaller diameter than the first (lower) portion/region 120, as shown in FIG. 2.

The configuration of the resilient member (or clamp spring) 106 and the first member (or clamp screw) 108 discussed above allows the first member (or clamp screw) 108 to move in a vertical direction when a vertical force is applied to the first member (or clamp screw) 108. For example, if a downward axial force is applied to the second member (or clamp nut) 110 in a direction towards the base plate 104 this force is translated to the first member (or clamp screw) 108 resulting in the first and second members (or clamp nut) 108, 110 moving in a downward direction towards the base plate 104. As this occurs, at least the inner portion (or inner ring) 112 of the resilient member (or clamp spring) 106 also experiences a downward axial force (in a direction away from the base plate 104) and begins to exert an opposite upward axial force in the upward direction (in a direction towards the base plate 104). This upward axial force results in the first and second member (or clamp nuts) 108, 110 moving in an upward direction (away from the base plate 104) when the upward axial force is greater than the downward axial force.

As can be seen in FIG. 2, a second cavity 284 exists between the bottom surface 280 of the top portion 160 of the embossed region 156 and a bottom portion 140 of the base plate 104. At least a portion of the first member (or clamp screw) 108 is maintained within this second cavity 284 when the resilient coupling mechanism 102 is in an elevated/extended position (e.g., a downward axial force is not being encountered or is less than the upward axial force of the resilient member (or clamp spring) 106), as shown in FIG. 2. As can be seen, the resilient member (or clamp spring) 106 is in a relaxed or partially relaxed state such that the second portion/region 122 of the first member (or clamp screw) 108 extends into the first cavity 168 such that a top surface 285 of the second portion/region 122 is below the bottom surface 280 of the top portion 160 of the embossed region 156. When the resilient coupling mechanism 102 is in a non-extended position (e.g., a downward axial force is being applied to the mechanism 102 that is greater than the opposite force being applied by the resilient member (or clamp spring) 106), at least the upper and lower portions 120, 122 of the first member (or clamp screw) 108 and at least one region of the second portion/region 132 of the second member (or clamp nut) 110 are disposed within the second cavity 284. In this example, at least one region of the first portion/region 130 of the second member (or clamp nut) 110 is disposed within, or is at least flush with, the first cavity 168 between the inner wall 166 of the embossed region 156.

One advantage of the assembly 100 is that the resilient coupling mechanism 102 provides an additional coupling point for at least the first portion 301 of the portable electronic device 300 in addition to the coupling point at the rotatable coupling mechanism (or bushing) 305. This provides additional support and rigidity to the portable electronic device 300. For example, FIG. 3 shows a portable electronic device 300 that comprises a first portion 301 and a second portion 303. The base plate 104 of the resilient coupling mechanism assembly 100 is coupled to a top/front portion 307 of the second portion 303 of the device 300 that faces a bottom/back portion 309 of the first portion 301.

In the example of FIG. 3, the first portion 301 is in an extended position (e.g., rotated to be perpendicular to the second portion 303. This extended configuration causes the device 300 to be more vulnerable to damage when the device 300 is dropped, bumped, etc. For example, because the rotatable coupling mechanism (or bushing) 305 is generally disposed towards a corner area 311 of the second portion 303 there is a greater distance between a first region 313 of the first portion 301 and the rotatable coupling mechanism (or bushing) 305 than the distance between a second region 315 of the first portion 301 and the rotatable coupling mechanism (or bushing) 305. Therefore, the stress and force experienced by at least the rotatable coupling mechanism (or bushing) 305 (and the coupling point between the mechanism 305 and the first portion 301 of the device 300) when an impact occurs at the first region 313 is much greater than the stress and force experienced by the rotatable coupling mechanism (or bushing) 305 when an impact occurs at the second region 315.

For example, the moment of a force can be represented as M=F x D, where M is the moment, F is the force of a drop impact (in this example) and D is the distance between the location of the drop impact on the first portion 301 and the rotatable coupling mechanism (or bushing) 305. As can be seen from FIG. 3, the distance D1 between the first region 313 and the rotatable coupling mechanism (or bushing) 305 is greater than the distance D2 between the second region 315 and the rotatable coupling mechanism (or bushing) 305. Therefore, the moment of a force experienced between the first region 313 and the rotatable coupling mechanism (or bushing) 305 is greater than the moment experienced by the second region 315 and the rotatable coupling mechanism (or bushing) 305. Therefore, it is much easier for damage to occur to the device 300 when a drop impact occurs at the first region 313 than the second region 315.

However, the resilient coupling mechanism 102 of the assembly 100 is configured to be coupled to the first portion 301 of the device 300 when the first portion 301 is in an extended position as shown in FIG. 3. Therefore, the moment of a force discussed above is decreased since the distance D₁ is decreased. For example, instead of M = F x D1 for the first region 313, M now equals M = F x (D1-D3) where D3 is the distance between the resilient coupling mechanism 102 and the rotary coupling mechanism 305. Therefore, the resilient coupling mechanism 102 provides additional support and rigidity to the portable electronic device 300 when the first portion 301 is in an extended position with respect to the second portion 303.

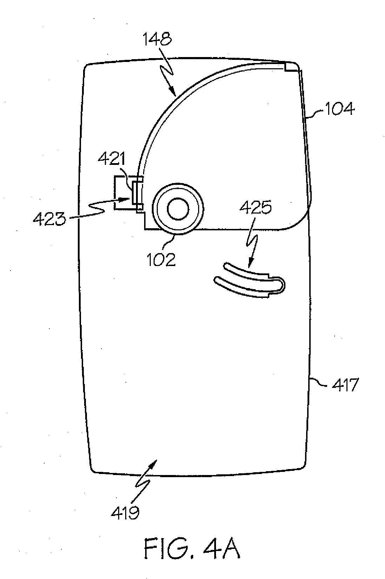

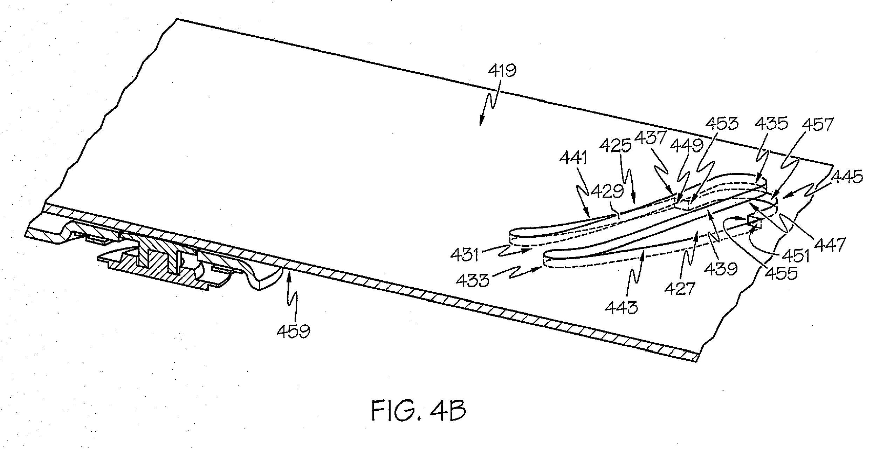

FIGs. 4-6 illustrate a sequence of resilient coupling mechanism 102 being coupled to a rotatable plate 417 of the resilient coupling mechanism assembly 100. In this example, the rotatable plate 417 couples to the back portion 309 of first portion 301 of the portable electronic device 300. For example, a top surface 419 of the rotatable plate 417 abuts the back portion 309 of the first portion 301 of the device 300. It should be noted that the rotatable plate 417 can be formed as part of the bottom portion 309 of the first portion 301 of the device 300 or can be removably coupled thereto. Alternatively, the rotatable plate 417 can be part of the portable electronic device 300 and not the resilient coupling mechanism assembly 100.

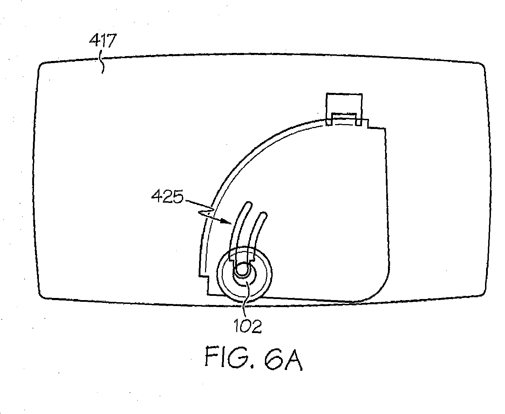

In particular, FIGs. 4A and 4B show that the rotatable plate 417 of the device 300 is in a non-extended position where the rotatable plate 417 is above and parallel to the second portion 303 of the device 300. As can be seen, in FIG. 4A, the rotatable plate 417 comprises an extending member 421 that extends from the top surface 419 of the rotatable plate 417 through a cavity 423 such that at least one region of the extending member 421 extends below the rotatable plate 417 and over and around the upper portion 150 of the protruding portion (or guide rail) 148 of the base plate 104. The extending member 421 abuts the protruding portion (or guide rail) 148 such that the protruding portion (or guide rail) 148 acts a guide for the extending member 421 when the rotatable plate 417 is transitioning from a non-extended position shown in FIG. 4A to an extended position shown in FIG. 6A.

The rotatable plate 417 comprises a slotted area 425. The slotted area 425 comprises a slot 427 that extends through the top surface 419 of the rotatable plate 417 through a bottom surface of the rotatable plate 417. The slot 427 comprises a curved configuration that substantially matches the angular movement of the rotatable plate 417 with respect to arc of the third side 146 of the base plate 104. This curved configuration is such that as the rotatable plate 417 transitions from the non-extended position to the extended position the resilient coupling mechanism 102 of the base plate 104 encounters the slot 427. It should be noted that the location of the resilient coupling mechanism 102 on the base plate 104 is such that the resilient coupling mechanism 102 encounters the slot 427 during transitioning of the rotatable plate 417 from the non-extended position to the extended position.

FIG. 4B shows that the slotted area 425 also comprises a tongued area 429 that comprises a first end 431 that is disposed at an end region 433 of the slot 427 closest to the resilient coupling mechanism 102 when the rotatable plate 417 is at the non-extended position. The first end 431 is coupled to or is a part of the rotatable plate 417. The tongued area 429 also comprises a second end 435 that is disposed opposite from the first end 431 and is substantially curved. The second end 435 is free and is not coupled to any part of the rotatable plate 417. The tongued area 429 comprises a first side 437 and a second side 439 disposed opposite from the first side 437, where the first and second sides 437, 439 connect the first and second ends 431, 435. The first and second sides 437, 439 comprise a curved configuration that substantially matches the curved configuration of the slotted area 425.

The tongued area 429 is disposed in between a first side portion 441 and a second side portion 443 of the slot 427. The first and second side portions 441, 443 connect the first end region 433 of the slot 427 with a second end region 445 of the slot 427 that is disposed opposite from the first end 433. In one example, the first end 431 of the tongued area 429 and the first end 433 of the slot 427 are the same. The tongued area 429 comprises a width that is smaller than a width between the first and second side portions 441, 443 of the slot 427. This allows the tongued area 429 to reside between the first and second portions 441, 443 without touching the first and second portions 441, 443. The tongued area 429 comprises a graduated slope that increases from the first end 431 to the second end 435 of the tongued area 429. Stated differently, the distance between the bottom surface 447 of the tongued area 429 and the slot 427 increases starting from the first end 431 and moving towards the second end 435. Also, because the first end 431 of the tongued area 429 is coupled to or part of the rotatable plate 417 and the second end 435 of the tongued area 429 is free, the tongued area 429 is able to transition/flex to a position that is above the slot 427, within the slot 427, or any position there between.

A first end 449 of the first side portion 441 and a second end 451 of the second side portion 443 of the slot 427 that are the farthest away from the resilient coupling mechanism 102 when the rotatable plate 417 is at the non-extended position are each coupled to the end 445 of the slot 427 that comprises a curved configuration that extends past these ends, as shown in FIG. 4B. For example, a first inward extending portion 453 extends from the first end 449 towards the second side portion 443 and a second inward extending portion 455 extends from the second end 451 towards the first side portion 441. A substantially curved region 457 connects the first inward extending portion 453 to the second inward extending portion 455. In this example the width between the first side portion 441 and the second side portion 443 of the slot 427 is larger than the diameter of the first portion/region 130 of the second member (or clamp nut) 110. This allows at least the first portion/region 130 of the second member (or clamp nut) 110 to rise above the slot 427. However, the curved end (second end) 445 of the slot 427 comprises a width that is less than the width of the first portion/region 130 of the second member (or clamp nut) 110, but larger than the second portion/region 132 of the second member (or clamp nut) 110.

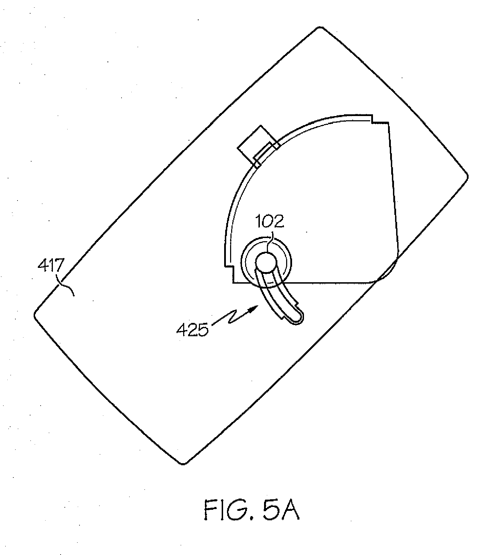

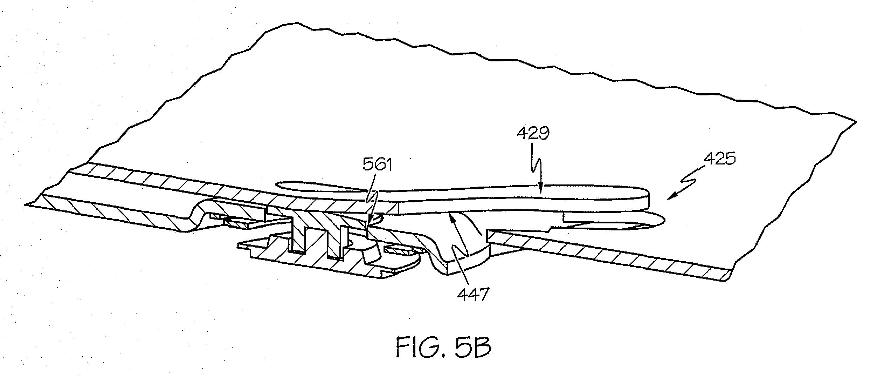

FIG. 4B also shows that the resilient coupling mechanism 102 is in a compressed position when the rotatable plate 417 is in the non-extended position. As can be seen in the cross-sectional view of FIG. 4B, the bottom surface 459 of the rotatable plate 417 is exerting a downward axial force (in a direction toward the resilient member (or clamp spring) 106) on the second member (or clamp nut) 110 which pushes the resilient coupling mechanism 102 axially into the second cavity 284 of the embossed region 156. As the rotatable plate 417 begins to transition from the non-extended position to the extended position the resilient coupling mechanism 102 encounters the slotted area 425 and the top surface 461 of the first portion/region 130 of the second member (or clamp nut) 110 contacts the bottom surface 447 of the tongued area 429, as shown in FIGs. 5A and 5B.

As discussed above, the slot 427 is wider than the second member (or clamp nut) 110 and the tongued area 429 slopes upward (i.e., the slope increases) above the slot 427. Therefore, as the rotatable plate 417 continues to transition to the extended position, the second member (or clamp nut) 110 of the resilient coupling mechanism 102 rises above the slot 427 at a height defined by the tongued area 429. For example, because the tongued area 429 slopes upward (i.e., the slope increases from the first end 431 to the second end 435) the downward axial force (in a direction towards the base plate 104) experienced by the resilient coupling mechanism 102 is decreased, thereby allowing the resilient member (or clamp spring) 106 to return to a less compressed state. This results in the resilient coupling mechanism 102 being pushed upward towards the rotatable plate 417 (at a distance defined by the slope of the tongued area 429) by the resilient member (or clamp spring) 106 (which is moving in a direction towards the base plate 104) as the rotatable plate 417 transitions to the extended position.

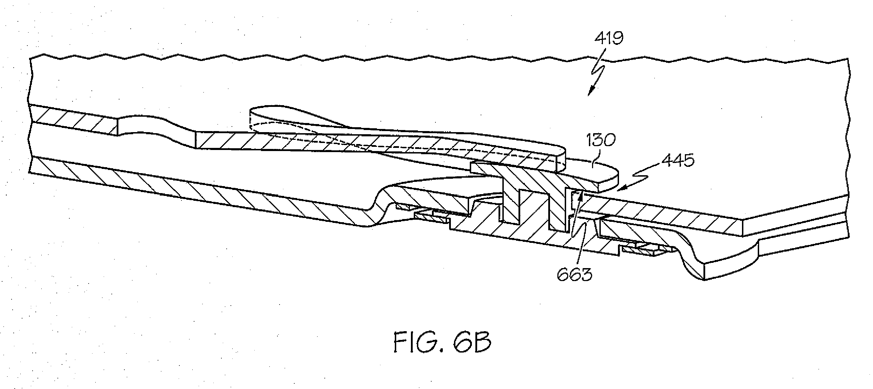

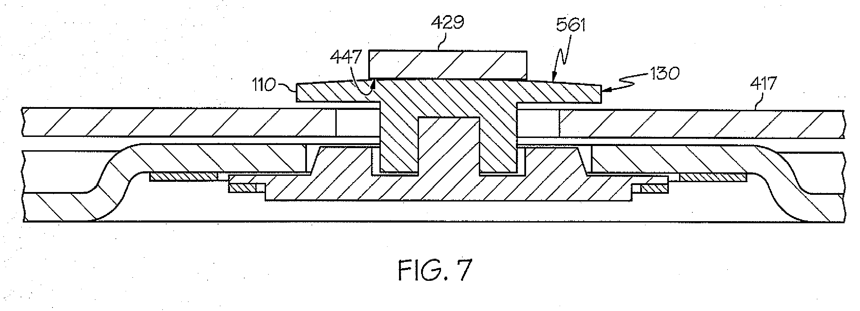

When the rotatable plate 417 has transitioned to the extended position the resilient coupling mechanism 102 has been moved a position corresponding to the curved end 445 of the slot 427. Stated differently, the resilient coupling mechanism 102 has been moved to a position where the second member (or clamp nut) 110 has been elevated to a position such that the bottom surface 663 of the first portion/region 130 of the second member (or clamp nut) 110 is above the top surface 419 of the rotatable plate 417 corresponding to the curved region of the second end of the slotted area, as shown in FIGs. 6A and 6B and FIG. 7. It should be noted that because the curved end 445 of the slot 427 comprises a width that is smaller than the diameter of the first portion/region 130 of the second member (or clamp nut) 110, the first portion/region 130 is elevated to a height that is above the curved end 445 of the slot 427 prior to reaching this end 445.

As can be seen in FIGs. 6A and 6B and FIG. 7, the first portion/region 130 of the second member (or clamp nut) 110 extends beyond the curved end 445 of the slot 427 and at least a portion of the bottom surface 663 of the first portion/region 130 abuts the top surface 419 of the rotatable plate 417. Therefore, the first portion/region 130 of the second member (or clamp nut) 110 is retained above the slot 427 when the rotatable plate 417 is in the extended position. This configuration couples the rotatable plate 417 to the resilient coupling mechanism 102, and hence, to the second portion 303 of the device 300.

It should be noted that the first portion/region 130 of the second member (or clamp nut) 110 maintains constant contact with the bottom surface 447 of the tongued area 429 as the rotatable plate 417 transitions between the non-extended and extended positions. For example, FIG. 7 shows that the rotatable plate 417 is in the extended position and the top surface 561 of first portion/region 130 of the second member (or clamp nut) 110 is in contact with the bottom surface 447 of the tongued area 429. As the rotatable plate 417 transitions from the extended position back to the non-extended position the second member (or clamp nut) of the resilient coupling mechanism 102 is moved from the curved end 445 to the wider area of the slot 427. Because the height of the tongued area 429 decreases from the second end 445 of the slot 427 to the first end 433 and the tongued area 429 remains in constant contact with the second member (or clamp nut) 110 of the resilient coupling mechanism 102, the downward axial force (in a direction towards the base plate 104) exerted on the resilient coupling mechanism 102 by the tongued area 429 increases as this transitioning occurs. As this downward axial force is increased, the second member (or clamp nut) 110 and first member (or clamp screw) 108 of the resilient coupling mechanism 102 are pushed downward towards the second cavity 284 of the embossed region 156), thereby continually compressing the resilient member (or clamp spring) 106 until the rotatable plate 417 has transitioned back to the non-extended position. As discussed above, when the rotatable plate 417 is in this position the resilient member (or clamp spring) 106 of the resilient coupling mechanism 102 has been compressed such that the first and second member (or clamp nuts) 108, 110 have been pushed down into the cavities 168, 284 of the embossed region 156, as shown in FIG. 4B.

As can be seen from the above discussion, the resilient coupling mechanism 102 of the resilient coupling mechanism assembly 100 provides an additional coupling point for at least a first portion of a portable electronic device 300. This additional coupling point provides additional support and rigidity to the portable electronic device. For example, when this first portion 301 of the device 300 is in an extended position, the moment of a force experienced by the first portion when the device is dropped, bumped, etc. is decreased by the resilient coupling mechanism 102. Therefore, less stress and force are exerted on the components of the device 300.

### Non-Limiting Examples

Although specific embodiments of the subject matter have been disclosed, those having ordinary skill in the art will understand that changes can be made to the specific embodiments without departing from the scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A rotatable coupling mechanism comprising:
a first portion (301) comprising:
a slotted area (425) having a curved configuration; and
a tongued area (429) having a curved configuration which matches the slotted area (425) and comprises a first end (431) that corresponds to a first end of a slot (427) within the slotted area (425) and gradually increasing in slope to a second end (435);
a second portion (303);
a resilient coupling mechanism (102) assembly comprising:
a base plate (104) coupled to the second portion (303) and comprising a first coupling point comprising a rotatable coupling mechanism (305) arranged to rotatably couple the first portion (301) to the second portion (303), the base plate (104) further comprising an embossed region (156) arranged to receive a resilient coupling mechanism (102) wherein the resilient coupling mechanism (102) comprises a second coupling point between the first portion (301) and the second portion (303), the resilient coupling mechanism (102) comprising:
a resilient member (106) arranged to reside in a first cavity (284) of the embossed region (156);
a first member (108) coupled to the resilient member (106), the first member (108) comprising a first cavity (126);
a vertical member (128) disposed within the cavity (126); and
a second member (110) coupled to the first member (108), the second member (110) comprising
a second cavity (136) configured to receive the vertical member (128) and wherein the first member (108) and second member (110) are at least one of moveable away from and toward the base plate (104) by the resilient member (106);
wherein as the first portion (301) rotates to an extended position with respect to the second portion (303), in which the first portion (301) is perpendicular to the second portion (303), the resilient coupling mechanism (102) engages the slot (427), and a first region (130) of the second member (110) extends above the slot (427) at a distance defined by the tongued area (429), and a surface (447) of the tongued area (429) contacts a surface (561) of the first region (130) of the second member (110), the tongued area (429) thereby exerting a decreasing force on the first member (108) and second member (110) as the first portion (301) rotates with respect to the second portion (303) to the extended position, such that the resilient coupling mechanism couples the first portion (301) to the second portion (303) in the extended position.

2. The mechanism of claim 1, where a first member (369) of the rotatable coupling mechanism (305) is rotatably coupled to the first portion (301), and where a second member (367) of the rotatable coupling mechanism (305) is fixed to the second portion (303), where the first member (369) rotates about the second member (367).

3. The mechanism of claim 1, where the first member (369) of the rotatable coupling mechanism (305) is rotatably coupled to a back portion (309) of the first portion (301), and where the second member (367) of the rotatable coupling mechanism (305) is fixed to the base plate (104), the back portion (309) of the first portion (301) facing the second portion (303).

4. The mechanism of any preceding claim, the resilient member (106) comprising at least an inner portion (112) that is coupled to an outer portion (114), the outer portion (114) circumscribing the inner portion (112), the first member comprising a first portion (120) and a second portion (122), the second portion (122) extending from a top surface (285) of the first portion (120), the first portion (120) comprising a diameter that is larger than a diameter of the second portion (122), a bottom surface (164) of the first portion (120) being coupled to a top surface (282) of the inner portion (112) of the resilient member (106), the first cavity extending from a top surface (165) of the second portion (122) to at least a top surface (285) of the first portion (120).

5. The mechanism of any preceding claim, the second member comprising a first portion (130) and a second portion (132), the first and second portions (130, 132) being substantially circular, the first portion (130) comprising a diameter that is larger than a diameter of the second portion (132), the second portion (132) extending from a bottom surface of the first portion (130), where at least a lower region (211) of the second portion (132) of the second member (110) is disposed within the first cavity (126) of the first member (108).

6. The mechanism of any preceding claim where a back portion (309) of the first portion (301) comprises:
the slotted area (425),
wherein the slot (427) extends through a top surface (419) of the back portion (309) and a bottom surface (459) of the back portion (309); and wherein
the second end (435) of the tongued area (429), is disposed opposite from the first end (431) and the first end (431) of the tongued area (429) is coupled to the back portion (309).

7. The mechanism of any preceding claim, where as the first portion (301) rotates to an extended position with respect to the second portion (303), the tongued area (429) exerting a downward axial force on the second member (110) in a direction towards the first member (108).

8. The mechanism of any preceding claim,
the slot (427) further comprising:
a first side (441);
a second side (443) disposed opposite the first side (441);
the first end region (433); and
a second end region (445),
the second end region (445) being disposed substantially near the second end (435) of the tongued area (429), a width of the slot (427) between the first side (441) and the second side (443) being larger than a width of the tongued area (429), the second end region (445) comprising a substantially curved region (457), the first side (441) and the second side (443) being coupled to the second end region (445) via a first inward extending portion (453) and a second inward extending portion (455), the first and second inward extending portions (453, 455) being coupled to the curved region (457), where a width between the first and second inward extending portions (453, 455) is smaller than the width between the first and second sides (441, 443) of the slot (427).

9. The mechanism of any preceding claim, where the first region (130) of the second member (110) extends above the curved region (457) of the second end region (445) of the slot (427) when the first portion (301) has rotated to an extended position that is perpendicular to the second portion (303), where a bottom surface (663) of the first region (130) of the second member (110) abuts the top surface (419) of the back portion (309), the first region (130) coupling the first portion (301) to the second portion (303), and
where a width between the first and second sides (441, 443) of the slot (427) is larger than a diameter of the first region (130) of the second member (110) of the resilient coupling mechanism (102), and where a width between the first and second inward extending portions (453, 455) of the slot (427) is smaller than the diameter of first region (130) of the second member (110) of the resilient coupling mechanism (102).

10. The mechanism of any preceding claim, wherein the resilient member (106) comprises at least an inner portion (112) that is coupled to an outer portion (114), the outer portion (114) circumscribing the inner portion (112), the first member comprising a first portion (120) and a second portion (122), the second portion (122) extending from a top surface (285) of the first portion (120), the first portion (120) comprising a diameter that is larger than a diameter of the second portion (122), a bottom surface (164) of the first portion (120) being coupled to a top surface (282) of the inner portion (112) of the resilient member (106), the first cavity (126) extending from a top surface (165) of the second portion (122) to at least a top surface (285) of the first portion (120).

11. The mechanism of any preceding claim, wherein the second member comprises a first portion (130) and a second portion (132), the first and second portions (130, 132) being substantially circular, the first portion (130) comprising a diameter that is larger than a diameter of the second portion (132), the second portion (132) extending from a bottom surface of the first portion (130), where at least a lower region (211) of the second portion (132) of the second member (110) is disposed within the first cavity (126) of the first member (108).

12. The mechanism of any preceding claim, where the resilient member (106) is a spring.

13. The mechanism of any preceding claim, further comprising:
a base plate (104) disposed above the resilient coupling mechanism (102), where a top surface (278) of the outer portion (114) of the resilient member (106) is coupled to a bottom surface (140) of the base plate (104), and wherein the embossed region (156) extends from the bottom surface (140) of the base plate (104) to an area above a top surface (138) of the base plate (104), the embossed region (156) being disposed over the resilient coupling member (106), where the embossed region (156) comprises a diameter that is larger than a diameter of the resilient member (106), the embossed region (156) comprising a third cavity (168) extending through a top portion (160) of the embossed region (156) into a first cavity (284) disposed below a bottom surface (280) of the top portion (160) of the embossed region (156).

14. The mechanism of any preceding claim, wherein the third cavity (168) comprises a diameter that is larger than a diameter of the second member (110) of the resilient coupling mechanism (102), and smaller than the diameter of the first portion (120) of the first member (108) of the resilient coupling mechanism (102).

15. The mechanism of any preceding claim, where at least a region of the second portion (122) of the first member (108) of the resilient coupling mechanism (102) extends into the first cavity (126) of the first member (108), and at least the first portion (132) of the second member (110) of the resilient coupling mechanism (102) extends above the top portion (160) of the embossed region (156) when the resilient member (106) is in a relaxed state.

## Patentansprüche

1. Drehbarer Koppelmechanismus mit:
einem ersten Abschnitt (301) mit:
einem geschlitzten Bereich (425), der eine gekrümmte Konfiguration hat,
einem Zungenbereich (429), der eine gekrümmte Konfiguration hat, die zu dem geschlitzten Bereich (425) passt, und ein erstes Ende (431) aufweist, das einem ersten Ende eines Schlitzes (427) in dem geschlitzten Bereich (425) entspricht, und der in einer Neigung bis zu einem zweiten Ende (435) allmählich ansteigt,
einem zweiten Abschnitt (303),
einer Federnder-Koppelmechanismus(102)-Baugruppe mit:
einer Grundplatte (104), die mit dem zweiten Abschnitt (303) gekoppelt ist, mit einem ersten Koppelpunkt mit einem drehbaren Koppelmechanismus (305), der dazu ausgelegt ist, den ersten Abschnitt (301) mit dem zweiten Abschnitt (303) drehbar zu koppeln, wobei die Grundplatte (104) ferner eine geprägte Region (156) aufweist, die dazu ausgelegt ist, einen federnden Koppelmechanismus (102) aufzunehmen, wobei der federnde Koppelmechanismus (102) einen zweiten Koppelpunkt zwischen dem ersten Abschnitt (301) und dem zweiten Abschnitt (303) aufweist, wobei der federnde Koppelmechanismus (102) Folgendes aufweist:
ein federndes Element (106), das dazu ausgelegt ist, sich in einer ersten Aussparung (284) der geprägten Region (156) zu befinden;
ein erstes Element (108), das an das federnde Element (106) gekoppelt ist, wobei das erste Element (108) eine erste Aussparung (126) aufweist,
ein vertikales Element (128), das in der Aussparung (126) angeordnet ist und
ein zweites Element (110), das an das erste Element (108) gekoppelt ist, wobei das zweite Element (110) Folgendes aufweist:
eine zweite Aussparung (136), die dazu konfiguriert ist, das vertikale Element (128) aufzunehmen, wobei das erste Element (108) und das zweite Element (110) zumindest eines aus von der Grundplatte (104) weg und durch das federnde Element (106) zu ihr hin bewegbar sind,
wobei, während sich der erste Abschnitt (301) in eine erweiterte Stellung in Bezug auf den zweiten Abschnitt (303) dreht, in welcher der erste Abschnitt (301) zum zweiten Abschnitt (303) rechtwinklig ist, sich der federnde Koppelmechanismus (102) mit dem Schlitz (427) in Eingriff befindet, und eine erste Region (130) des zweiten Elements (110) in einer Entfernung, die von dem Zungenbereich (429) festgelegt ist, über den Schlitz (427) hervorragt bzw. sich erstreckt, und eine Oberfläche (447) des Zungenbereichs (429) eine Oberfläche (561) der ersten Region (130) des zweiten Elements (110) berührt, wobei der Zungenbereich (429) dadurch eine abnehmende Kraft auf das erste Element (108) und das zweite Element (110) ausübt, während sich der erste Abschnitt (301) in Bezug auf den zweiten Abschnitt (303) in die erweiterte Stellung dreht, so dass in der erweiterten Stellung der federnde Koppelmechanismus den ersten Abschnitt (301) an den zweiten Abschnitt (303) koppelt.

2. Mechanismus nach Anspruch 1, wobei ein erstes Element (369) des drehbaren Koppelmechanismus (305) drehbar an den ersten Abschnitt (301) gekoppelt ist, und wobei ein zweites Element (367) des drehbaren Koppelmechanismus (305) an dem zweiten Abschnitt (303) befestigt ist, wobei sich das erste Element (369) um das zweite Element (367) dreht.

3. Mechanismus nach Anspruch 1, wobei das erste Element (369) des drehbaren Koppelmechanismus (305) drehbar an einen hinteren Abschnitt (309) des ersten Abschnitts (301) gekoppelt ist, und wobei das zweite Element (367) des drehbaren Koppelmechanismus (305) an der Grundplatte (104) befestigt ist, wobei der hintere Abschnitt (309) des ersten Abschnitts (301) dem zweiten Abschnitt (303) zugewandt ist.

4. Mechanismus nach einem der vorhergehenden Ansprüche, wobei das federnde Element (106) mindestens einen inneren Abschnitt (112) aufweist, der mit einem äußeren Abschnitt (114) gekoppelt ist, wobei der äußere Abschnitt (114) den inneren Abschnitt (112) umgibt, wobei das erste Element einen ersten Abschnitt (120) und einen zweiten Abschnitt (122) aufweist, wobei der zweite Abschnitt (122) von einer oberen Oberfläche (285) des ersten Abschnitts (120) hervorragt bzw. sich erstreckt, wobei der erste Abschnitt (120) einen Durchmesser aufweist, der größer als ein Durchmesser des zweiten Abschnitts (122) ist, wobei eine untere Oberfläche (164) des ersten Abschnitts (120) an die obere Oberfläche (282) des inneren Abschnitts (112) des federnden Elements (106) gekoppelt ist, wobei sich die erste Aussparung von einer oberen Oberfläche (165) des zweiten Abschnitts (122) bis zu mindestens einer oberen Oberfläche (285) des ersten Abschnitts (120) erstreckt.

5. Mechanismus nach einem der vorhergehenden Ansprüche, wobei das zweite Element einen ersten Abschnitt (130) und einen zweiten Abschnitt (132) aufweist, wobei der erste und der zweite Abschnitt (130, 132) im Wesentlichen kreisförmig sind, wobei der erste Abschnitt (130) einen Durchmesser aufweist, der größer als ein Durchmesser des zweiten Abschnitts (132) ist, wobei der zweite Abschnitt (132) von einer unteren Oberfläche des ersten Abschnitts (130) hervorragt bzw. sich erstreckt, wobei zumindest eine tiefere Region (211) des zweiten Abschnitts (132) des zweiten Elements (110) in der ersten Aussparung (126) des ersten Elements (108) angeordnet ist.

6. Mechanismus nach einem der vorhergehenden Ansprüche, wobei ein hinterer Abschnitt (309) des ersten Abschnitts (301) Folgendes aufweist:
den geschlitzten Bereich (425),
wobei sich der Schlitz (427) durch eine obere Oberfläche (419) des hinteren Abschnitts (309) und eine untere Oberfläche (459) des hinteren Abschnitts (309) erstreckt, und wobei
das zweite Ende (435) des Zungenbereichs (429) dem ersten Ende (431) gegenüberliegend angeordnet ist, und das erste Ende (431) des Zungenbereichs (429) mit dem hinteren Abschnitt (309) gekoppelt ist.

7. Mechanismus nach einem der vorhergehenden Ansprüche, wobei sich der erste Abschnitt (301) in eine erweiterte Stellung in Bezug auf den zweiten Abschnitt (303) dreht, wobei der Zungenbereich (429) eine nach unten gerichtete axiale Kraft auf das zweite Element (110) in eine Richtung zu dem ersten Element (108) hin ausübt.

8. Mechanismus nach einem der vorhergehenden Ansprüche,
wobei der Schlitz (427) ferner Folgendes aufweist:
eine erste Seite (441),
eine zweite Seite (443), die der ersten Seite (441) gegenüberliegend angeordnet ist,
die Erstendregion (433) und
eine Zweitendregion (445),
wobei die Zweitendregion (445) im Wesentlichen nahe dem zweiten Ende (435) des Zungenbereichs (429) angeordnet ist, wobei eine Breite des Schlitzes (427) zwischen der ersten Seite (441) und der zweiten Seite (443) größer als eine Breite des Zungenbereichs (429) ist, wobei die Zweitendregion (445) eine im Wesentlichen gekrümmte Region (457) aufweist, wobei die erste Seite (441) und die zweite Seite (443) mit der Zweitendregion (445) über einen ersten sich einwärts erstreckenden Abschnitt (453) und einen zweiten sich einwärts erstreckenden Abschnitt (455) gekoppelt sind, wobei der erste und der zweite sich einwärts erstreckende Abschnitt (453, 455) an die gekrümmten Region (457) gekoppelt sind, wobei eine Breite zwischen dem ersten und dem zweiten sich einwärts erstreckenden Abschnitt (453, 455) kleiner als die Breite zwischen der ersten und der zweiten Seite (441, 443) des Schlitzes (427) ist.

9. Mechanismus nach einem der vorhergehenden Ansprüche, wobei die erste Region (130) des zweiten Elements (110) über die gekrümmte Region (457) der Zweitendregion (445) des Schlitzes (427) hervorragt bzw. sich erstreckt, wenn sich der erste Abschnitt (301) in eine erweiterte Stellung gedreht hat, die zum zweiten Abschnitt (303) rechtwinklig ist, wobei eine untere Oberfläche (663) der ersten Region (130) des zweiten Elements (110) an die ober Oberfläche (419) des hinteren Abschnitts (309) angrenzt, wobei die erste Region (130) den ersten Abschnitt (301) mit dem zweiten Abschnitt (303) koppelt, und
wobei eine Breite zwischen der ersten und der zweiten Seite (441, 443) des Schlitzes (427) größer als ein Durchmesser der ersten Region (130) des zweiten Elements (110) des federnden Koppelmechanismus (102) ist, und wobei eine Breite zwischen dem ersten und dem zweiten sich einwärts erstreckenden Abschnitt (453, 455) des Schlitzes (427) kleiner als der Durchmesser der ersten Region (130) des zweiten Elements (110) des federnden Koppelmechanismus (102) ist.

10. Mechanismus nach einem der vorhergehenden Ansprüche, wobei das federnde Element (106) mindestens einen inneren Abschnitt (112) aufweist, der an einen äußeren Abschnitt (114) gekoppelt ist, wobei der äußere Abschnitt (114) den inneren Abschnitt (112) umgibt, wobei das erste Element einen ersten Abschnitt (120) und einen zweiten Abschnitt (122) aufweist, wobei der zweite Abschnitt (122) von einer oberen Oberfläche (285) des ersten Abschnitts (120) hervorragt bzw. sich erstreckt, wobei der erste Abschnitt (120) einen Durchmesser aufweist, der größer als ein Durchmesser des zweiten Abschnitts (122) ist, wobei eine untere Oberfläche (164) des ersten Abschnitts (120) mit einer oberen Oberfläche (282) des inneren Abschnitts (112) des federnden Elements (106) gekoppelt ist, wobei sich die erste Aussparung (126) von einer oberen Oberfläche (165) des zweiten Abschnitts (122) bis zumindest zu einer oberen Oberfläche (285) des ersten Abschnitts (120) erstreckt.

11. Mechanismus nach einem der vorhergehenden Ansprüche, wobei das zweite Element einen ersten Abschnitt (130) und einen zweiten Abschnitt (132) aufweist, wobei der erste und der zweite Abschnitt (130, 132) im Wesentlichen kreisförmig sind, wobei der erste Abschnitt (130) einen Durchmesser aufweist, der größer als ein Durchmesser des zweiten Abschnitts (132) ist, wobei der zweite Abschnitt (132) von einer unteren Oberfläche des ersten Abschnitts (130) hervorragt bzw. sich erstreckt, wobei zumindest eine tiefere Region (211) des zweiten Abschnitts (132) des zweiten Elements (110) in der ersten Aussparung (126) des ersten Elements (108) angeordnet ist.

12. Mechanismus nach einem der vorhergehenden Ansprüche, wobei das federnde Element (106) eine Feder ist.

13. Mechanismus nach einem der vorhergehenden Ansprüche, ferner mit:
einer Grundplatte (104), die über dem federnden Koppelmechanismus (102) angeordnet ist, wobei eine obere Oberfläche (278) des äußeren Abschnitts (114) des federnden Elements (106) mit einer unteren Oberfläche (140) der Grundplatte (104) gekoppelt ist, und wobei sich die geprägte Region (156) von der unteren Oberfläche (140) der Grundplatte (104) bis zu einem Bereich über der oberen Oberfläche (138) der Grundplatte (104) erstreckt, wobei die geprägte Region (156) oberhalb des federnden Koppelelements (106) angeordnet ist, wobei die geprägte Region (156) einen Durchmesser aufweist, der größer als ein Durchmesser des federnden Elements (106) ist, wobei die geprägte Region (156) eine dritte Aussparung (168) aufweist, die sich durch einen oberen Abschnitt (160) der geprägten Region (156) in eine erste Aussparung (284) erstreckt, die unter einer unteren Oberfläche (280) des oberen Abschnitts (160) der geprägten Region (156) angeordnet ist.

14. Mechanismus nach einem der vorhergehenden Ansprüche, wobei die dritte Aussparung (168) einen Durchmesser aufweist, der größer als ein Durchmesser des zweiten Elements (110) des federnden Koppelmechanismus (102) und kleiner als der Durchmesser des ersten Abschnitts (120) des ersten Elements (108) des federnden Koppelmechanismus (102) ist.

15. Mechanismus nach einem der vorhergehenden Ansprüche, wobei sich mindestens eine Region des zweiten Abschnitts (122) des ersten Elements (108) des federnden Koppelmechanismus (102) in die erste Aussparung (126) des ersten Elements (108) erstreckt, und sich zumindest der erste Abschnitt (132) des zweiten Elements (110) des federnden Koppelmechanismus (102) über den oberen Abschnitt (160) der geprägten Region (156) erstreckt, wenn sich das federnde Element (106) in einem entspannten Zustand befindet.

## Revendications

1. Mécanisme d'accouplement rotatif, comprenant :
une première partie (301) comprenant :
une zone fendue (425) ayant une configuration incurvée ; et
une zone à languette (429) ayant une configuration incurvée qui coïncide avec la zone à fente (425) et comprend une première extrémité (431) qui correspond à une première extrémité d'une fente (427) au sein de la zone fendue (425) et ayant une pente augmentant progressivement jusqu'à une seconde extrémité (435) ;
une seconde partie (303) ;
un ensemble de mécanisme d'accouplement élastique (102) comprenant :
une plaque de base (104) accouplée à la seconde partie (303) et comprenant un premier point d'accouplement comprenant un mécanisme d'accouplement rotatif (305) agencé pour accoupler en rotation la première partie (301) à la seconde partie (303), la plaque de base (104) comprenant, en outre, une région en relief (156) agencée pour recevoir un mécanisme d'accouplement élastique (102), le mécanisme d'accouplement élastique (102) comprenant un second point d'accouplement entre la première partie (301) et la seconde partie (303), le mécanisme d'accouplement élastique (102) comprenant :
un élément élastique (106) agencé pour résider dans une première cavité (284) de la région en relief (156) ;
un premier élément (108) accouplé à l'élément élastique (106), le premier élément (108) comprenant une première cavité (126) ;
un élément vertical (128) disposé au sein de la cavité (126) ; et
un second élément (110) accouplé au premier élément (108), le second élément (110) comprenant :
une deuxième cavité (136) configurée pour recevoir l'élément vertical (128) et le premier élément (108) ou le second élément (110) pouvant être rapproché et éloigné de la plaque de base (104) par l'élément élastique (106) ;
dans lequel, lorsque la première partie (301) tourne jusqu'à une position déployée par rapport à la seconde partie (303), la première partie (301) étant perpendiculaire à la seconde partie (303), le mécanisme d'accouplement élastique (102) engage la fente (427), et une première région (130) du second élément (110) s'étend au-dessus de la fente (427) à une distance définie par la zone à languette (429), et une surface (447) de la zone à languette (429) est en contact avec une surface (561) de la première région (130) du second élément (110), la zone à languette (429) exerçant alors une force décroissante sur le premier élément (108) et le second élément (110) tandis que la première partie (301) tourne par rapport à la seconde partie (303) jusqu'à la position déployée, de manière que le mécanisme d'accouplement élastique accouple la première partie (301) à la seconde partie (303) dans la position déployée.

2. Mécanisme selon la revendication 1, dans lequel un premier élément (369) du mécanisme d'accouplement rotatif (305) est accouplé en rotation à la première partie (301), et dans lequel un second élément (367) du mécanisme d'accouplement rotatif (305) est fixé à la seconde partie (303), le premier élément (369) tournant autour du second élément (367).

3. Mécanisme selon la revendication 1, dans lequel le premier élément (369) du mécanisme d'accouplement rotatif (305) est accouplé en rotation à une partie arrière (309) de la première partie (301), et dans lequel le second élément (367) du mécanisme d'accouplement rotatif (305) est fixé à la plaque de base (104), la partie arrière (309) de la première partie (301) étant tournée vers la seconde partie (303).

4. Mécanisme selon l'une quelconque des revendications précédentes, l'élément élastique (106) comprenant au moins une partie interne (112) qui est accouplée à une partie externe (114), la partie externe (114) entourant la partie interne (112), le premier élément comprenant une première partie (120) et une seconde partie (122), la seconde partie (122) s'étendant depuis une surface supérieure (285) de la première partie (120), la première partie (120) ayant un diamètre qui est supérieur à un diamètre de la seconde partie (122), une surface inférieure (164) de la première partie (120) étant accouplée à une surface supérieure (282) de la partie interne (112) de l'élément élastique (106), la première cavité s'étendant depuis une surface supérieure (165) de la seconde partie (122) jusqu'à au moins une surface supérieure (285) de la première partie (120).

5. Mécanisme selon l'une quelconque des revendications précédentes, le second élément comprenant une première partie (130) et une seconde partie (132), les première et seconde parties (130, 132) étant sensiblement circulaires, la première partie (130) ayant un diamètre qui est supérieur à un diamètre de la seconde partie (132), la seconde partie (132) s'étendant depuis une surface inférieure de la première partie (130), au moins une région inférieure (211) de la seconde partie (132) du second élément (110) étant disposée au sein de la première cavité (126) du premier élément (108).

6. Mécanisme selon l'une quelconque des revendications précédentes, dans lequel une partie arrière (309) de la première partie (301) comprend :
la zone fendue (425),
la fente (427) s'étendant à travers une surface supérieure (419) de la partie arrière (309) et une surface inférieure (459) de la partie arrière (309) ; et
la seconde extrémité (435) de la zone à languette (429) étant disposée à l'opposé de la première extrémité (431) et la première extrémité (431) de la zone à languette (429) étant accouplée à la partie arrière (309).

7. Mécanisme selon l'une quelconque des revendications précédentes, dans lequel, tandis que la première partie (301) tourne jusqu'à une position déployée par rapport à la seconde partie (303), la zone à languette (429) exerce une force axiale descendante sur le second élément (110) dans une direction vers le premier élément (108).

8. Mécanisme selon l'une quelconque des revendications précédentes, la fente (427) comprenant, en outre :
un premier côté (441) ;
un second côté (443) disposé à l'opposé du premier côté (441) ;
la première région d'extrémité (433) ; et
une seconde région d'extrémité (445),
la seconde région d'extrémité (445) étant disposée sensiblement à proximité de la seconde extrémité (435) de la zone à languette (429), une largeur de la fente (427) entre le premier côté (441) et le second côté (443) étant supérieure à une largeur de la zone à languette (429), la seconde région d'extrémité (445) comprenant une région sensiblement incurvée (457), le premier côté (441) et le second côté (443) étant accouplés à la seconde région d'extrémité (445) par le biais d'une première partie s'étendant vers l'intérieur (453) et d'une seconde partie s'étendant vers l'intérieur (455), les première et seconde parties s'étendant vers l'intérieur (453, 455) étant accouplées à la région incurvée (457), une largeur entre les première et seconde parties s'étendant vers l'intérieur (453, 455) étant plus petite que la largeur entre les premier et second côtés (441, 443) de la fente (427).

9. Mécanisme selon l'une quelconque des revendications précédentes, dans lequel la première région (130) du second élément (110) s'étend au-dessus de la région incurvée (457) de la seconde région d'extrémité (445) de la fente (427) lorsque la première partie (301) a tourné jusqu'à une position déployée qui est perpendiculaire à la seconde partie (303), dans lequel une surface inférieure (663) de la première région (130) du second élément (110) bute contre la surface supérieure (419) de la partie arrière (309), la première région (130) accouplant la première partie (301) à la seconde partie (303), et
dans lequel une largeur entre les premier et second côtés (441, 443) de la fente (427) est supérieure à un diamètre de la première région (130) du second élément (110) du mécanisme d'accouplement élastique (102), et une largeur entre les première et seconde parties s'étendant vers l'intérieur (453, 455) de la fente (427) est inférieure au diamètre de la première région (130) du second élément (110) du mécanisme d'accouplement élastique (102).

10. Mécanisme selon l'une quelconque des revendications précédentes, dans lequel l'élément élastique (106) comprend au moins une partie interne (112) qui est accouplée à une partie externe (114), la partie externe (114) entourant la partie interne (112), le premier élément comprenant une première partie (120) et une seconde partie (122), la seconde partie (122) s'étendant depuis une surface supérieure (285) de la première partie (120), la première partie (120) ayant un diamètre qui est supérieur à un diamètre de la seconde partie (122), une surface inférieure (164) de la première partie (120) étant accouplée à une surface supérieure (282) de la partie interne (112) de l'élément élastique (106), la première cavité s'étendant depuis une surface supérieure (165) de la seconde partie (122) jusqu'à au moins une surface supérieure (285) de la première partie (120).

11. Mécanisme selon l'une quelconque des revendications précédentes, dans lequel le second élément comprend une première partie (130) et une seconde partie (132), les première et seconde parties (130, 132) étant sensiblement circulaires, la première partie (130) ayant un diamètre qui est supérieur à un diamètre de la seconde partie (132), la seconde partie (132) s'étendant depuis une surface inférieure de la première partie (130), dans lequel au moins une région inférieure (211) de la seconde partie (132) du second élément (110) est disposée au sein de la première cavité (126) du premier élément (108).

12. Mécanisme selon l'une quelconque des revendications précédentes, dans lequel l'élément élastique (106) est un ressort.

13. Mécanisme selon l'une quelconque des revendications précédentes, comprenant, en outre :
une plaque de base (104) disposée au-dessus du mécanisme d'accouplement élastique (102), dans lequel une surface supérieure (278) de la partie externe (114) de l'élément élastique (106) est accouplée à une surface inférieure (140) de la plaque de base (104), et dans lequel la région en relief (156) s'étend depuis la surface inférieure (140) de la plaque de base (104) jusqu'à une zone au-dessus d'une surface supérieure (138) de la plaque de base (104), la région en relief (156) étant disposée sur l'élément d'accouplement élastique (106), la région en relief (156) ayant un diamètre qui est supérieur à un diamètre de l'élément élastique (106), la région en relief (156) comprenant une troisième cavité (168) s'étendant à travers une partie supérieure (160) de la région en relief (156) jusque dans une première cavité (284) disposée au-dessous d'une surface inférieure (280) de la partie supérieure (160) de la région en relief (156).

14. Mécanisme selon l'une quelconque des revendications précédentes, dans lequel la troisième cavité (168) a un diamètre qui est supérieur à un diamètre du second élément (110) du mécanisme d'accouplement élastique (102), et inférieur au diamètre de la première partie (120) du premier élément (108) du mécanisme d'accouplement élastique (102).

15. Mécanisme selon l'une quelconque des revendications précédentes, dans lequel au moins une région de la seconde partie (122) du premier élément (108) du mécanisme d'accouplement élastique (102) s'étend dans la première cavité (126) du premier élément (108), et au moins la première partie (132) du second élément (110) du mécanisme d'accouplement élastique (102) s'étend au-dessus de la partie supérieure (160) de la région en relief (156) lorsque l'élément élastique (106) est dans un état relâché.
